# EUROPEAN PATENT APPLICATION

(11) **EP 1 519 065 A2**
(43) Date of publication of application: **30.03.2005**
(21) Application number: 04022588.0
(22) Date of filing: 22.09.2004
(51) Int. Cl.: F16D 13/64

(54) **Coil spring and torque transmission and torque fluctuation absorbing device applied therewith**

(30) Priority: 29.09.2003 JP 2003338337
(71) Applicant: Aisin Seiki Kabushiki Kaisha, Kariya-shi, Aichi-ken 448-8650 (JP)
(72) Inventor: Kitada, Koji Intell.Property Dept., Kariya-shi Aichi-ken 448-8650 (JP); Takashi, Yukihisa Intell.Prop.Dept., Kariya-shi Aichi-ken 448-8650 (JP)
(74) Representative: Leson, Thomas Johannes Alois, Dipl.-Ing.

(57) **Abstract**

A coil spring (10) includes an effective coil portion (A) positioned at a central portion of the coil spring (10), and an end turn portion (B) positioned at ends of the coil spring (10). The effective coil portion (A) has turns in a winding with a first pitch (a). The end turn portion (B) has turns in a winding with a second pitch (b) gradually increasing from approximately zero to the first pitch (a). The number of turns of the coil spring (10) at the end turn portion (B) is greater than a predetermined number.

## Description

### FIELD OF THE INVENTION

The present invention relates to a coil spring. More particularly, the present invention pertains to a coil spring and a torque transmission and torque fluctuation absorbing device including a damper mechanism applied with a coil spring.

### BACKGROUND

Damper mechanism applied a clutch disc assembly of a vehicle includes a drive plate frictionally engaged with a flywheel unitarily rotating with a crankshaft of an engine via a friction member, a driven plate connected to an input shaft of a transmission, and an elastic connection member elastically connecting the drive plate and the driven pate in a rotational direction. The elastic connection member includes a compression coil spring and a resin cushion, or the like. Each elastic connection member is accommodated in a window bore formed in a circumferential direction on the drive plate and the drive plate to be supported. Upon the relative rotation of the drive plate and the driven plate, the elastic connection member is compressed in the rotational direction by end portions of the window bores of the drive plate and the driven plate. With the foregoing effects, the torque inputted into the clutch disc assembly is transmitted between the drive plate and the driven plate to absorb and damp the torque fluctuation.

With the known torque transmission and torque fluctuation absorbing device, the winding pitch of the coil spring is varied and the plural elastic connection members having different Young's modulus are arranged in order to improve the characteristic for absorbing and damping the torque fluctuation, which optimizes the hysteresis characteristics and the damping characteristics. Further, the downsizing and the decreasing of the weight of the damper mechanism have been in progress. Particularly, the coil spring serving as the elastic connection member requires the reduction of the weight and the ensuring of the strength at the compression, which are conflicting each other.

In JP2003-202035A2, it is considered that when the coil spring is compressed in the rotational direction, the rotational direction moving amount of the external periphery side portion of the window bore, or the like, for compressing the coil spring assumes greater than the rotational direction moving amount of the internal periphery side, and thus the deflection amount at the external periphery side of the coil spring assumes greater than the deflection amount at the internal periphery side to have the greater stress. In order to prevent the application of the excessive stress and the excessive deflection which is to cause the damage, with the construction described in JP2003-202035A2, the differences of the deflection amount per a turn of a winding of a coil between the internal periphery side and the external periphery side is reduced at the compression of the coil spring to moderate the stress and the deflection amount. More particularly, the number of effective coils at the internal periphery side of the coil spring is determined to be greater than the number of effective coils at the external periphery side of the coil spring and the coil pitch at the external periphery side is determined to be constant, for achieving the construction with shorter length while restraining the excessive stress and the excessive deflection.

With the construction of the known torque transmission and torque fluctuation absorbing device, because the coil spring is provided to be compressed at the lateral wall in each window bore formed on the drive plate and the driven plate, both ends of the coil spring are configured to be flat, and the cross-sectional dimension of the coil at end turn portion is determined to be gradually reduced from the center to the end portions. Thus, it is required to restrain the deflection amount generated at the end turn portion upon the compression to be equal to or less than a breaking deflection amount.

However, with the construction described in JP2003-202035A2, it is determined that the coil pitch at the internal periphery side is denser than the coil pitch at the external periphery side. With this construction, although the free height of the coil spring can be restrained low, the stress is likely to exceed the tolerant deflection amount upon the compression at the external periphery side because the coil pitch increases with relatively large ratio from the end turn portion to an effective coil portion. Accordingly, with the construction described in JP2003-202035A2, expensive high intensity materials and bigger coil may be applied for ensuring the mechanical strength, which increases the weight and the manufacturing cost.

A need exists for a coil spring and a torque transmission and torque fluctuation absorbing device applied therewith which increases the reliability of strength by reducing a deflection amount at an end turn portion.

### SUMMARY OF THE INVENTION

In light of the foregoing, the present invention provides a coil spring, which includes an effective coil portion positioned at a central portion of the coil spring, and an end turn portion positioned at ends of the coil spring. The effective coil portion has turns in a winding with a first pitch. The end turn portion has turns in a winding with a second pitch gradually increasing from approximately zero to the first pitch. The number of turns of the coil spring at the end turn portion is greater than a predetermined number.

According to another aspect of the present invention, a torque transmission and torque fluctuation absorbing device includes a drive plate connected to a drive shaft of a driving source, a driven plate positioned approximately coaxial to the drive plate to be relatively rotatable, the driven plate being connected to a driven shaft of a driven element, a damper mechanism positioned between the drive plate and the driven plate for absorbing torque transmission and torque fluctuation between the driving source and the driven element, and a coil spring provided at the damper mechanism. The coil spring includes an effective coil portion positioned at a central portion of the coil spring, and an end turn portion positioned at ends of the coil spring. The effective coil portion has turns in a winding with a first pitch. The end turn portion has turns in a winding with a second pitch gradually increasing from approximately zero to the first pitch. The number of turns of the coil spring at the end turn portion is greater than a predetermined number.

### BRIEF DESCRIPTION OF THE DRAWINGS

The foregoing and additional features and characteristics of the present invention will become more apparent from the following detailed description considered with reference to the accompanying drawings, wherein:

Fig. 1 is a front view of a clutch disc including a coil spring according to an embodiment of the present invention.

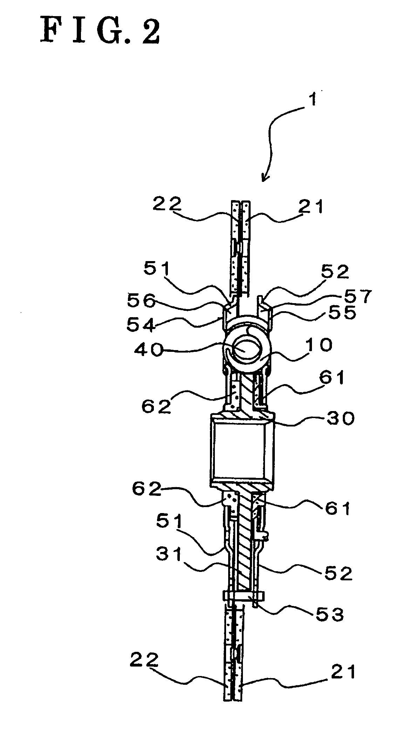

Fig. 2 is a cross-sectional view of the clutch disc including the coil spring taken on line II-II of Fig. 1.

Fig. 3 is a front view of the coil spring according to the embodiment of the present invention.

Fig. 4 is a longitudinal cross-sectional view of the coil spring according to the embodiment of the present invention.

Fig. 5 is a lateral view of the coil spring viewed from rightward of Fig. 3.

Fig. 6 is a graph showing characteristics of the coil spring according to the embodiment of the present invention.

Fig. 7 is a graph showing characteristics of the coil spring according to the embodiment of the present invention.

### DETAILED DESCRIPTION

One embodiment of the present invention will be explaneed with reference to illustrations of the drawing figures as follows.

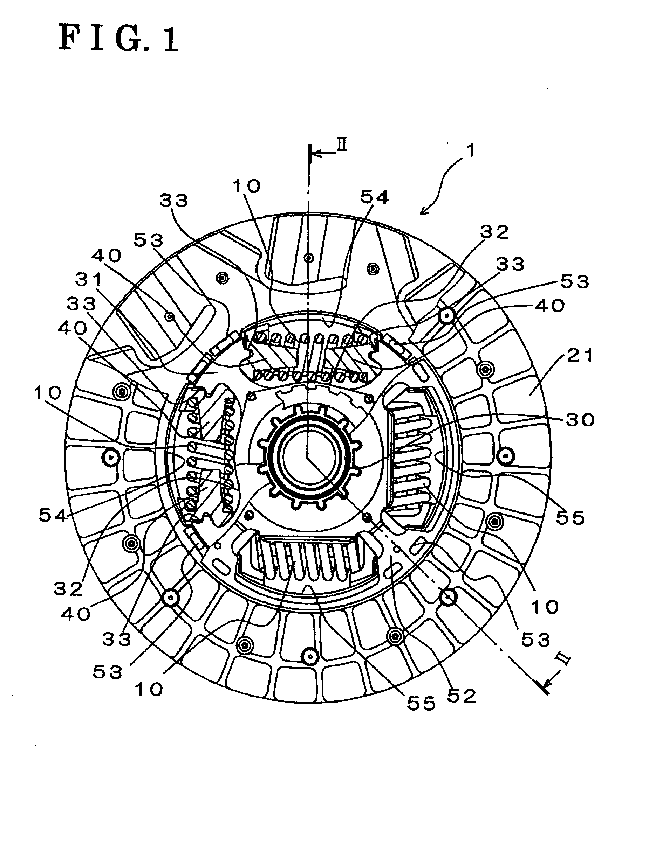

A clutch disc 1 for a frictional clutch device provided between an engine and a transmission for a vehicle is shown in Fig. 1. The clutch disc 1 includes clutch facings 21, 22 fixed to the both sides of an external periphery portion of the clutch disc 1 via rivets. The clutch facings 21, 22 are sandwiched between a flywheel connected to a crankshaft of the engine serving as a driving source and a pressure plate biased by a diaphragm spring of a clutch cover fixed to the flywheel via bolts and are configured to be unitarily rotated with the flywheel by the frictional engagement. The clutch disc 1 further includes a hub 30. The hub 30 is connected with an input shaft serving as a driven element of the transmission via a spline fitting. Thus, the clutch disc 1 transmits the torque generated between the flywheel and the input shaft.

The hub 30 of the clutch disc 1 includes a flange portion 31 extended in a radial direction. An external periphery portion of the flange portion 31 is formed with four accommodation portions 32 keeping equal intervals from each other on the circumference for accommodating coil springs 10 respectively. The coil spring 10 is accommodated in each accommodation portion 32 via a sheet 40 provided at both ends of the accommodation portion 32.

Walls 33 of the accommodation portion 32 pushes the coil spring 10 via the sheet 40 upon the rotation of the hub 30.

The clutch disc 1 further includes a drive plate 51. The clutch facings 21, 22 are fixed to the both surfaces of the external periphery portion of the drive plate 51 via rivets. The drive plate 51 is fixed to a sub-drive plate 52 via a rivet 53 at more internal periphery side than the clutch facings 21, 22. The flange portion 31 of the hub 30 is sandwiched by the drive plate 51 and the sub-drive plate 52.

The drive plate 51 and the sub-drive plate 52 are approximately coaxially pivoted by the hub 30 to relatively rotate via a bush-thrust members 61, 62 serving as a bearing. The unitarily formed drive plate 51 and the sub-drive plate 52 are formed with window bores 54, 55 extended in the tangential direction or in the approximately circumferential direction corresponding to the accommodation portion 32 of the coil spring 10 formed on the flange portion 31 of the hub 30. The window bores 54, 55 accommodate the coil springs 10 respectively via the sheet 40. Likewise the accommodation portion 32 of the hub 30, at the window bores 54, 55, walls 56, 57 press the coil springs 10 via the sheet 40 upon the rotation of the drive plate 50.

The torque transmission of the clutch disc 1 with the foregoing construction will be explained as follows. The torque transmitted from the engine to the flywheel is transmitted to the drive plate 51 and the sub-drive plate 52 by the frictional engagement force generated by the clutch facings 21, 22 sandwiched between the flywheel and the pressure plate to relatively rotate the drive plate 51 and the hub 30, so that the walls 56, 57 of the window bores 54, 55 push a first end of the coil spring 10 via the sheet 40 to compress the coil spring 10. A second end of the compressed coil spring 10 pushes the wall 33 of the accommodation portion 32 formed on the flange portion 31 of the hub 30 via the sheet 40 by the restoring force to transmit the torque to the hub 30. Thereafter, the torque is inputted to the input shaft of the transmission. In the meantime, the reverse torque generated at the deceleration, or the like, is transmitted from the hub 30 to the drive plate 51 via the coil spring 10 with the reverse path.

Further, the sudden torque fluctuation generated between the engine and the input shaft at the shift change of the vehicle, or the like, is converted into the thermal energy at the thrust member 61, 62 and into the thermal energy by the elastic energy and the compression or tension force of the compression of the coil sprig 10 to effectively damp the torque fluctuation.

The construction of the coil spring 10 applied to the clutch disc 1 according to the embodiment of the present invention will be further explained as follows.

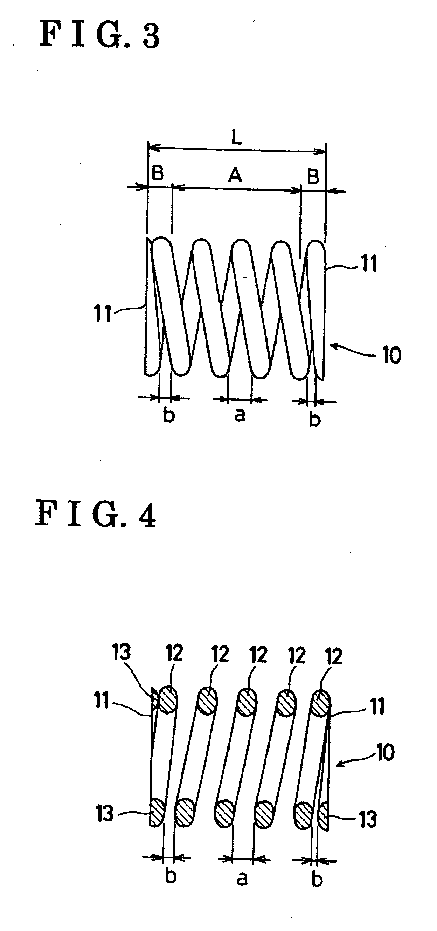

The plural coil springs 10 are accommodated in the accommodation portions 32 of the hub 30 and the window bores 54, 55 of the drive plate 51 and the sub-drive plate 52 via the sheet 40 respectively. The coil spring 10, as shown in Fig. 3, has a length of L including an effective coil portion A having a first coil pitch a and an end turn portion B having a second coil pitch b at ends of coils. With the construction according to the embodiment of the present invention, the first coil pitch a is determined to be constant and the second coil pitch b is configured to be gradually increased from zero (0) to the first coil pitch a from a tip end of the coil. The coil of the coil spring 10 may be made from an oil-tempered wire for spring. The coil spring 10 is configured to be oval having a diameter in cross-section of approximate 4mm, to have a coil outside diameter of 20mm, and to be a right hand coil. The coil ends 11, 11 of the coil spring 10 is plane machined by grinding and configured to be compressed in the axial direction via the sheet 40 upon the relative rotation between the hub 30 and the drive plate 51 of the clutch disc 1.

As shown in Fig. 4, the dimension of a cross-section 12 of the coil at the effective coil portion A corresponds to the dimension of the cross section of the coil per se. On the other hand, the dimension of a cross section 13 of the coil at the end turn portion B is constructed to be smaller than the cross section of the coil because the coil ends 11, 11 are configured to be plane. Thus, in case the coil spring 10 is compressed at the end turn portion B, larger stress is generated than at the effective coil portion A due to the smaller cross sectional dimension, which may break the known coil spring applied with the excessive stress.

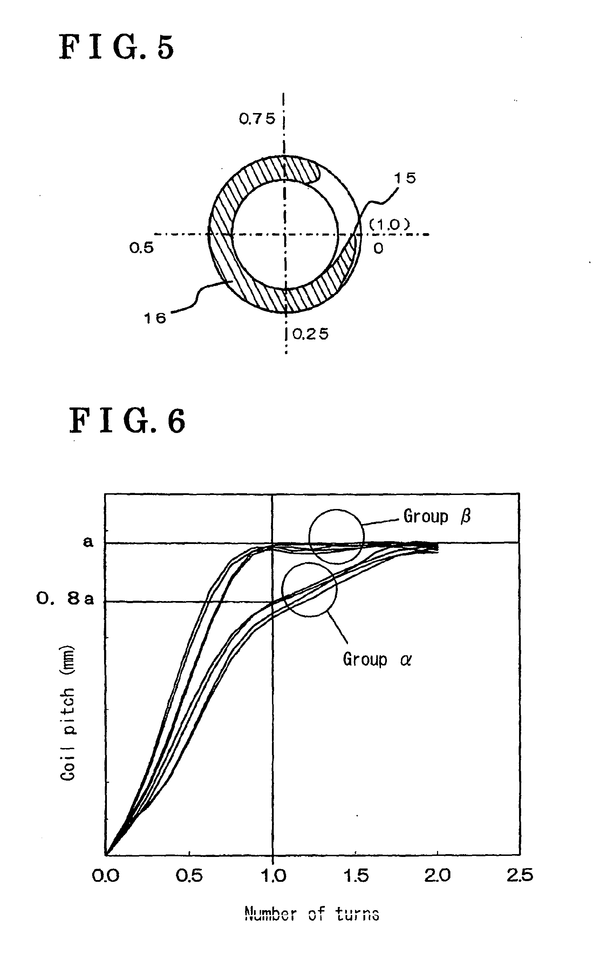

As shown in Fig. 5, a starting point 15 of the turn in a winding of the end turn portion B is provided at the right side (i.e., turn 0) of Fig. 5. The coil spring 10 is configured to be spiral counterclockwise. A seat surface 16 is formed by the grinding process.

Fig. 6 shows a graph showing an increase of the second coil pitch b of the coil spring 10 from the coil end 11 at the end turn portion B to the effective coil portion A. Group α shows data of the coil spring restrained with the increase of the coil pitch according to the embodiment of the present invention. The second coil pitch b is, for example, determined to be approximately 80 percent at the first turn relative. to the first coil pitch a of the effective coil portion A according to the embodiment of the present invention. Group β is a comparison example against the Group α. With the construction of the coil spring of Group β, the coil pitch at the first turn is suddenly increased to reach the first coil pitch a.

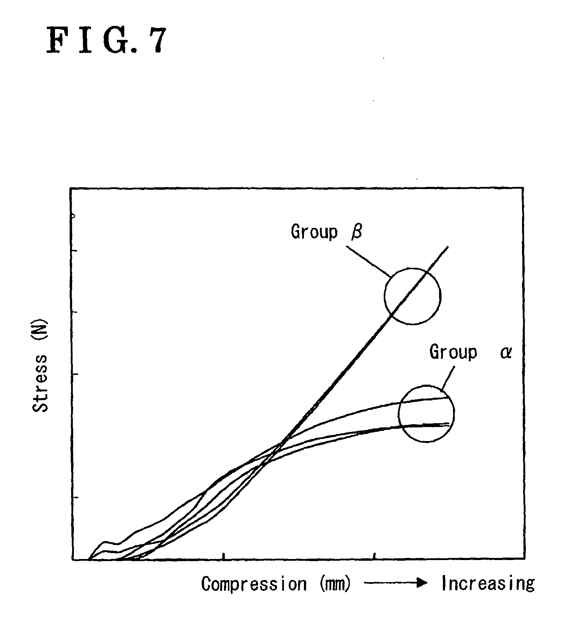

Referring to Fig. 7 showing the relationships of the stress generated at the end turn portion B and the compression length when the coil springs of the Group α and the Group β are compressed, the generated stress increases as the compression length increases. Upon the compression, the coil spring of Group β is all broken (i.e., right end of curve). On the other hand, none of the coil springs of Group α is broken and the generation of the stress is restrained to be approximately a half of Group β. With the construction of the coil springs of Group α, the further deflection of the coil spring is prevented because the coil at the end turn portion B contacts the adjacent coil before reaching the breaking deflection upon the compression. Further, because the increase of the coil pitch b at the end turn portion B is restrained, the change of the dimension of the cross-section 13 of the coil assumes gradual to moderate the increase of the stress.

Accordingly, with the construction of the end turn portion B of the coil spring 10 according to the embodiment of the present invention, the coil spring with high reliability can be provided. Further, because it is not necessary to add the additional numbers of the turns of the coil at the end turn portion B for increasing the strength, the coil spring with shorter length and lower manufacturing cost can be provided. Moreover, the weight and the manufacturing cost of the coil spring can be reduced because it is not necessary to increase the size of the coil and to change the materials for the coil to the material with higher intensity.

Although the coil of the coil spring made from oil-tempered wire, having the oval configuration in cross-section of the coil, having the diameter of approximately 4mm, having the coil outside diameter of 20mm, and having the length of 45mm is illustrated in the foregoing explanations of the embodiment of the present invention, the construction of the coil spring is not limited. The materials for the coil spring may include spring steel member, piano wires, hard drawn steel wires, stainless steel wires, or the like. The configuration of the coil in cross section may be circle.

Although the coil pitch at the effective coil portion of the coil spring is constant in the foregoing embodiment of the present invention, the coil spring having variable coil pitches varying the spring characteristic depending on the compression amount of the coil spring may be adopted.

Although the embodiment of the present invention is explained with reference to the coil spring of the clutch disc, the coil spring may be applied to other damper devices such as a flywheel damper and a lockup damper for a torque converter, or the like.

According to the embodiment of the present invention, the excessive deflection amount and the excessive stress leading the breakage of the end turn portion of the coil spring, for example, applied to the flywheel damper and the clutch disc, or the like, for absorbing and damping the torque fluctuation and transmitting the torque between the transmission connected to the driving element and the driving source such as the engine and the electric motor, or the like, can be effectively restrained. More particularly, because the variation of the cross sectional dimension of the coil from the coil ends of the spring coil to the center is relatively small, the stress applied at the compression can be mitigated. Further, because the coil pitch is constructed to be smaller at the position of the coil having the relatively small dimension in cross-section, the coil contacts the adjacent coil before reaching the breaking deflection amount to prevent further deflection, thus to avoid the deflection even if the deflection is generated. Accordingly, the mechanical reliability of the coil spring applied, for example, to the flywheel damper and the clutch disc, or the like, can be significantly increased. Further, because the mechanical characteristic of the end turn portion of the coil spring is improved, it is not necessary to provide excessive length of the end turn portion, and thus the length of the coil spring per se can be reduced, the wire diameter and the material can be determined to be optimum, and the weight and the manufacturing cost can be reduced.

According to the embodiment of the present invention, the intensity against the breakage can be effectively improved for the coil spring (e.g., wire diameter 3-5mm, length 30-60mm), for example, made from oil-tempered wire for spring and applied to the flywheel damper and the clutch disc, or the like, for the clutch device of the vehicle.

The principles, preferred embodiment and mode of operation of the present invention have been described in the foregoing specification. However, the invention which is intended to be protected is not to be construed as limited to the particular embodiment disclosed. Further, the embodiments described herein are to be regarded as illustrative rather than restrictive. Variations and changes may be made by others, and equivalents employed, without departing from the sprit of the present invention. Accordingly, it is expressly intended that all such variations, changes and equivalents which fall within the spirit and scope of the present invention as defined in the claims, be embraced thereby.
A coil spring includes an effective coil portion positioned at a central portion of the coil spring, and an end turn portion positioned at ends of the coil spring. The effective coil portion has turns in a winding with a first pitch. The end turn portion has turns in a winding with a second pitch gradually increasing from approximately zero to the first pitch. The number of turns of the coil spring at the end turn portion is greater than a predetermined number.

## Claims

1. A coil spring comprising:
an effective coil portion positioned at a central portion of the coil spring, the effective coil portion having turns in a winding with a first pitch; **characterized in that**
an end turn portion positioned at ends of the coil spring, the end turn portion having turns in a winding with a second pitch gradually increasing from approximately zero to the first pitch; and
number of turns of the coil spring at the end turn portion is greater than a predetermined number.

2. The coil spring according to Claim 1, wherein the number of turns of the coil spring at the end turn portion is equal to or greater than one.

3. The coil spring according to Claim 1, wherein
the coil spring includes seat surfaces at ends thereof; and
the seat surface is configured to be plane.

4. The coil spring according to Claim 3, wherein
the plane surface of the seat surface is formed by grinding process.

5. The coil spring according to Claim 1, wherein
the coil pitch of a first turn from an end of the end turn portion of the coil spring is formed to be 80 percent relative to the first coil pitch.

6. The coil spring according to Claim 5, wherein
the coil spring includes seat surfaces at ends thereof; and
the seat surface is configured to be plane.

7. The coil spring according to Claim 2, wherein
the coil spring includes a coil configured to be oval in cross section.

8. The coil spring according to Claim 2, wherein the coil spring is made from oil-tempered wire.

9. The coil spring according to Claim 2, wherein
the first coil pitch of the coil spring is constant.

10. The coil spring according to Claim 5, wherein
the coil spring includes a coil configured to be oval in cross section.

11. The coil spring according to Claim 5, wherein the coil spring is made from oil-tempered wire.

12. The coil spring according to Claim 5, wherein the first coil pitch of the coil spring is constant.

13. The coil spring according to Claim 6, wherein
the coil spring includes a coil configured to be oval in cross section.

14. The coil spring according to Claim 6, wherein the coil spring is made from oil-tempered wire.

15. The coil spring according to Claim 6, wherein the first coil pitch of the coil spring is constant.

16. The coil spring according to Claim 5, wherein the coil spring includes a coil configured to be circle in cross section.

17. The coil spring according to Claim 2, wherein the coil spring is made from piano wire.

18. The coil spring according to Claim 2, wherein the coil spring is made from stainless steel wire.

19. A torque transmission and torque fluctuation absorbing device comprising:
a drive plate connected to a drive shaft of a driving source;
a driven plate positioned approximately coaxial to the drive plate to be relatively rotatable, the driven plate being connected to a driven shaft of a driven element;
a damper mechanism positioned between the drive plate and the driven plate for absorbing torque transmission and torque fluctuation between the driving source and the driven element; and
a coil spring provided at the damper mechanism, the coil spring comprising: **characterized in that** an effective coil portion positioned at a central portion of the coil spring, the effective coil portion having turns in a winding with a first pitch;
an end turn portion positioned at ends of the coil spring, the end turn portion having turns in a winding with a second pitch gradually increasing from approximately zero to the first pitch; and
number of turns of the coil spring at the end turn portion is greater than a predetermined number.

20. The torque transmission and torque fluctuation absorbing device according to Claim 19, wherein the number of turns of the coil spring at the end turn portion is equal to or greater than one.
